# DEMANDE DE BREVET EUROPEEN

(11) **EP 2 620 067 A1**
(43) Date de publication de la demande: **31.07.2013**
(21) Numéro de dépôt: 12425016.8
(22) Date de dépôt: 25.01.2012
(51) Int. Cl.: A43B 5/04, B29D 35/12

(54) **Chaussure de sport avec parties en matériau très rigide**

(71) Demandeur: Rossignol Lange S.R.L., 31044 Montebelluna (IT)
(72) Inventeur: Posato, Tiziano, Maser (TV) 31010 (IT); Dal Bello, Luca, Falze di Trevignano (TV) 31040 (IT); Fregoni, Andrea, 31038 Paese (TV) (IT); Frare, Gabriele, Volpago Del Montello (TV) 31040 (IT)
(74) Mandataire: Novaimo

(57) **Abrégé**

Procédé de fabrication d'un sous-ensemble de chaussure de sport, **caractérisé en ce qu'**il comprend :
- une première phase de mise en forme d'au moins un élément thermodurcissable (2) qui forme une première partie de la paroi du sous-ensemble et de fixation d'un film de fixation (15) sur tout ou partie de la surface de cet élément thermodurcissable (2) ; puis,
- une seconde phase d'injection d'un matériau thermoplastique qui forme une seconde partie de la paroi du sous-ensemble et qui vient recouvrir au moins une partie du film de fixation (15) de la première partie au niveau d'une interface sur laquelle se forme une fixation des deux parties entre-elles.

## Description

L'invention concerne un procédé de fabrication de tout ou partie d'une chaussure de sport. Elle concerne aussi tout ou partie d'une chaussure de sport en tant que telle. Elle est particulièrement adaptée au domaine des chaussures pour planche de glisse telle que ski ou surf ou des chaussures de patinage, qui subissent des efforts importants lors de leur utilisation et pour lesquelles une structure particulièrement résistante est nécessaire. Par exemple, l'invention concerne les sous-ensembles de chaussures de type coque ou collier.

Une chaussure de ski est un bon exemple de chaussure qui subit de nombreux efforts et doit être dotée d'une bonne rigidité. Toutefois, elle doit aussi posséder une souplesse suffisante pour assurer un confort au skieur et lui permettre d'ouvrir la chaussure pour la chausser et la déchausser, et lui permettre de fléchir ses genoux vers l'avant lors de la pratique du ski.

Pour répondre à ces exigences, les procédés de fabrication de chaussures de ski les plus utilisés aujourd'hui sont basés sur des procédés d'injection de matériaux plastiques de type polyuréthane, polypropylène, polyéthylène ou polyamide. Cette approche ne permet toutefois pas d'obtenir une chaussure suffisamment rigide, notamment pour ses utilisations extrêmes comme en compétition. La rigidité de ces chaussures est de plus variable avec la température, diminue quand la température augmente, ce qui rend le comportement d'une telle chaussure variable du fait de cette instabilité thermique. Enfin, une telle chaussure présente souvent un poids important.

Pour répondre à ces inconvénients, un procédé de fabrication de chaussure de ski a été décrit dans le brevet EP1295540, permettant la réalisation d'une chaussure de ski à l'aide de plusieurs tissus de fibres de carbone reliés par une résine par une technique de polymérisation de la résine sur des moules pour former deux demi-coques, avant l'association des deux demi-coques pour former finalement la chaussure. Ce procédé permettant d'obtenir une chaussure très rigide présente toutefois un premier inconvénient d'être complexe et coûteux, en comparaison des techniques conventionnelles d'injection. Il présente de plus un second inconvénient de ne pas répondre aux exigences de souplesse de ces chaussures. Pour ces raisons, il a vite été abandonné.

Le document US20100180471 décrit une autre solution semblable à la précédente, présentant les mêmes inconvénients.

Le document FR2887178 décrit enfin une autre solution de chaussure de ski permettant d'associer des parties très rigides avec d'autres parties plus conventionnelles, en matériau plastique injecté. Plus précisément, cette solution permet la fixation d'un tissu sous forme de résine contenant des fibres sur une partie de chaussure formée par injection d'un matériau thermoplastique grâce à une altération de la surface initialement lisse de la partie en matériau thermoplastique pour rendre possible sa cohésion avec la résine contenant les fibres. Par cette solution, un élément en matériau très rigide peut être rajouté sur certaines zones choisies d'une chaussure pour améliorer son comportement. Ce procédé de fabrication reste toutefois complexe à mettre en oeuvre.

Ainsi, un objet de la présente invention consiste à proposer une solution qui permet de fabriquer une chaussure de sport qui atteint un meilleur compromis entre les différentes contraintes de poids, de rigidité et souplesse, de stabilité avec la température et de coût.

L'invention est précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue de côté de la face extérieure d'une coque de chaussure de ski selon un mode de réalisation de l'invention.
La figure 2 représente une vue en coupe selon l'axe AA de la coque de chaussure de ski de la figure 1.

Le mode de réalisation de l'invention propose de concevoir une paroi de chaussure de sport par l'association d'au moins une première partie dans un matériau thermodurcissable avec au moins une autre partie dans un matériau plastique fabriquée avantageusement par un procédé d'injection classique.

Pour la première partie, un matériau thermodurcissable est utilisé, qui présente donc par nature la particularité d'être mis en forme par une étape d'association de deux composants, une résine et un durcisseur. Ce procédé est irréversible. Après que le mélange soit fait, il atteint une forme finale très rigide et définitive, non modifiable, notamment par un phénomène de réticulation. A titre d'exemple, un matériau composite comme comprenant des fibres de verre, de carbone, ou d'aramide, etc., dans une résine à matrice thermodurcissable comme une résine époxy ou phénolique, peut être utilisé pour cette première partie thermodurcissable. Finalement, cette première partie en matériau thermodurcissable présente la caractéristique d'atteindre une grande rigidité pour une faible épaisseur, ce qui permet de réduire le poids global de la chaussure de sport tout en augmentant sa rigidité. Elle présente de plus l'avantage d'être insensible aux variations de température et procure une grande stabilité thermique à la chaussure de sport.

Pour la seconde partie, un matériau plastique injectable est utilisé. Pour cela, un matériau composite de type thermoplastique peut être utilisé, qui présente la particularité de durcir lors de son refroidissement selon un procédé réversible. A titre d'exemple, ce matériau peut comprendre des fibres intégrées dans une résine à matrice thermoplastique, qui peut être du polypropylène, ou du polyuréthane, etc. En variante, un simple plastique comme un polyuréthane de dureté de 55 shd peut être utilisé.

Le procédé de fabrication d'un sous-ensemble de chaussure de sport selon le principe précédent comprend une première phase de réalisation d'au moins un élément thermodurcissable, destiné à former la première partie thermodurcissable mentionnée ci-dessus.

Pour cela, la première phase comprend une étape de mise en forme de l'élément thermodurcissable, par exemple à partir de tissus imprégnés de résines thermodurcissables qui sont disposés dans un moule, le mélange des deux composants étant réalisé en amont.

En remarque, un élément en matériau thermoplastique ne colle pas sur un matériau thermodurcissable si celui-ci est déjà réticulé, au contraire du procédé inverse. Ainsi, le procédé de fabrication utilise un film intermédiaire qui se trouve dans un matériau thermoplastique qui rend possible une telle liaison par nature impossible, comme cela va maintenant être détaillé.

Cette première phase comprend ainsi une étape supplémentaire qui consiste à recouvrir tout ou partie de la surface de l'élément thermodurcissable par un film de fixation. Selon le mode de réalisation, ce film de fixation se trouve dans un matériau thermoplastique, par exemple un film de polyuréthane. Il peut présenter une faible épaisseur, par exemple comprise entre 0,05 et 0,5 mm, voire entre 0,1 et 0,2 mm. En variante, cette épaisseur est supérieure ou égale à 0,05 mm, voire supérieure ou égale à 0,1 mm. Elle peut aussi être inférieure ou égale à 1 mm. En variante, ce film consiste en une couche de vernis ou de laque, avantageusement en matériau thermoplastique.

Cette étape supplémentaire peut consister à disposer un film de fixation sur l'élément thermodurcissable, avant sa réticulation, c'est-à-dire avant qu'il atteigne sa forme finale très rigide et irréversible. Le durcissement final de l'élément thermodurcissable induit dans le même temps la soudure du film de fixation sur sa surface.

En variante, le film peut être déposé au préalable contre la surface du moule utilisé pour former l'élément thermodurcissable, auquel cas cette étape supplémentaire est finalement réalisée avant l'étape de mise en forme de l'élément thermodurcissable.

Plus généralement, ce film peut être disposé au contact de l'élément thermodurcissable à tout moment de préférence avant sa réticulation.

En variante, le film peut être fixé différemment à la surface de cet élément thermodurcissable, par exemple par collage.

Le film de fixation a pour fonction de permettre la liaison de l'élément thermodurcissable ainsi finalisé lors de cette première phase avec le matériau thermoplastique de la seconde partie, comme cela va être détaillé ci-dessous. Ainsi, ce film de fixation recouvre de préférence une proportion importante de ia surface de l'élément thermodurcissable destinée à venir en contact avec la seconde partie thermoplastique. Cette surface forme finalement une interface entre les deux parties, qui sont superposées au niveau de cette surface. Le film peut recouvrir l'intégralité de cette surface pour atteindre une fixation maximale. En variante, il peut n'en recouvrir qu'une partie.

En complément, ce film peut aussi être déposé hors de la future interface entre les deux parties de chaussure, pour remplir une autre fonction de protection de l'élément thermodurcissable contre les agressions extérieures et/ou une fonction esthétique.

Ensuite, quand cette première phase est terminée, la paroi du sous-ensemble de chaussure est complétée par une seconde phase comprenant une injection d'un matériau plastique, pour former la seconde partie de la paroi.

Lors de cette seconde phase, la liaison entre le matériau plastique injecté sur l'élément thermodurcissable formé lors de la première phase est obtenue grâce au film qui recouvre ce dernier. Ce film se trouve en effet dans un matériau compatible avec une telle liaison, qui survient alors automatiquement lors de l'injection du matériau thermoplastique sur le film, comme une soudure entre ces différents éléments. En remarque, sans ce film, la liaison d'un matériau thermoplastique injecté sur un élément thermodurcissable ne se formerait pas : pour cette raison, les deux matériaux sont dits par nature incompatibles.

Finalement, ce procédé présente l'avantage d'une grande simplicité. Il permet de fabriquer d'abord des éléments thermodurcissables dans des moules adaptés, et de les démouler facilement. Il permet ensuite d'utiliser les moules d'injection plus complexes pour former des sous-ensembles complets de chaussure de sport de manière similaire à l'état de la technique, en disposant simplement dans un tel moule un ou plusieurs élément(s) thermodurcissable(s) résultant de la première phase de fabrication décrite précédemment.

Naturellement, le procédé de fabrication d'un sous-ensemble de chaussure de sport tel que décrit ci-dessus peut être implémenté de différentes manières. Notamment, il reste compatible avec plusieurs étapes d'injection, permettant l'utilisation de plusieurs couches de différents matériaux formées par différentes étapes d'injection, comme cela est courant dans l'état de la technique. Ainsi, d'autres étapes d'injection peuvent être envisagées avant ou après les deux phases du procédé décrites ci-dessus.

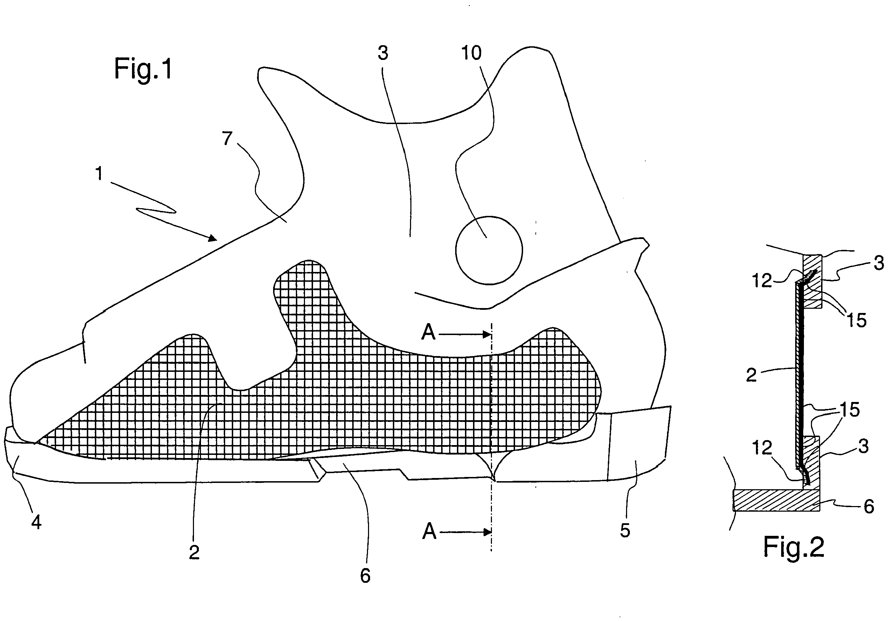

La figure 1 illustre à titre d'exemple une coque 1 de chaussure de ski formée par un procédé de fabrication tel que décrit ci-dessus. Une telle coque est destinée à loger le pied d'un skieur et à recevoir la fixation d'un collier, non représenté, articulé autour d'un axe de liaison 10. Comme cela est représenté sur la figure 1, la face extérieure de la paroi de cette coque 1 comprend une première partie thermodurcissable, sous la forme d'un élément thermodurcissable 2, qui s'étend sur une partie de la surface latérale de la coque. Le reste de la paroi de la coque est occupé par une seconde partie 3 en matériau thermoplastique, obtenue par une étape de surinjection sur l'élément thermodurcissable 2, comme cela a été décrit ci-dessus.

Dans cette réalisation, l'élément thermodurcissable 2 s'étend sur sensiblement presque toute la longueur de la coque, du trottoir avant 4 jusqu'au trottoir arrière 5. D'autre part, Il s'étend depuis la base de la coque 1, juste au-dessus de sa semelle 6, jusqu'à environ la moitié de la hauteur de la coque. En variante, il pourrait aussi s'étendre au sein de la semelle. Dans ce mode de réalisation, l'élément thermodurcissable 2 est non recouvert et forme seul la paroi de la coque sur presque l'intégralité de sa surface. Cette construction permet à la paroi de la coque 1 de présenter une épaisseur très restreinte, visible sur la figure 2, dans la zone occupée par l'élément thermodurcissable. Cette implémentation présente l'avantage de fortement réduire le risque de frottement de la paroi latérale de la coque durant la pratique du ski, notamment lors des virages durant lesquels le ski vient en appui sur sa carre prenant une inclinaison pouvant s'approcher de la direction perpendiculaire à la surface neigeuse. En revanche, certaines zones de la coque exigent plutôt de la souplesse, comme les rabats 7, pour faciliter le chaussage et le déchaussage. De telles zones de la coque 1 n'intègrent donc naturellement pas d'élément thermodurcissable.

La figure 2 représente une coupe AA selon un plan vertical transverse d'une zone de la coque présentant les deux parties formant sa paroi, et notamment la liaison entre ses deux parties. Il apparaît que l'élément thermodurcissable 2 présente une surface sensiblement rectiligne, continue, à l'exception de ses deux extrémités 12 qui forment des sortes de crochets, d'inserts venant au sein de l'épaisseur de la partie thermoplastique 3 juxtaposée. L'élément thermodurcissable 12, y compris ses extrémités 12, est recouvert du film de fixation 15 sur toute sa surface extérieure (c'est-à-dire orientée vers l'extérieur de la chaussure). Sur la figure, l'épaisseur du film de fixation 15 est volontairement exagérée pour faciliter la lecture de l'illustration. En pratique l'élément thermodurcissable 2 est plus épais que le film de fixation 15. La forme inclinée des extrémités 12 de l'élément thermodurcissable 2 permet d'atteindre ainsi une bonne liaison entre les deux parties de la coque, évite ieur dissociation accidentelle, puisque ces extrémités 12 sont intégralement noyées dans la partie thermoplastique 3. Dans ce mode de réalisation, la liaison entre les deux parties de la coque n'est réalisée que sur une faible surface, sur laquelle ces deux parties sont juxtaposées. En variante, elles peuvent se recouvrir sur une surface plus ou moins importante, la seconde partie 3 pouvant venir sur la surface extérieure et/ou la surface intérieure de l'élément thermodurcissable, sur tout ou partie de sa surface.

Naturellement, l'invention ne porte pas sur la forme spécifique des deux parties de la chaussure mais sur le concept d'associer ces deux parties, qui peuvent ainsi prendre toute forme sans sortir du cadre de l'invention. De plus, la surface de liaison entre ces deux parties peut être de toute nature, d'une première solution extrême dans laquelle seuls leurs contours extérieurs sont fixés, de manière semblable à l'illustration de la figure 2, jusqu'à une seconde solution extrême dans laquelle l'intégralité de l'élément thermodurcissable 2 est intégré au sein de la partie thermoplastique 3. Dans l'exemple illustré, un seul élément thermodurcissable 2 a été illustré mais plusieurs éléments peuvent naturellement être utilisés dans le même sous-ensemble de chaussure. Par exemple, dans une coque telle que représentée par les figures, un second élément thermodurcissable 2 peut être prévue de manière sensiblement symétrique au niveau de la paroi latérale opposée, non visible sur la figure 1.

Naturellement, la solution reste compatible avec toute autre solution de fixation complémentaire entre les deux parties du sous-ensemble de chaussure, par exemple de type mécanique à l'aide de rivets.

La solution a été illustrée dans le cadre d'une coque de chaussure de ski. Elle pourrait naturellement être utilisée pour fabriquer tout autre sous-ensemble d'une chaussure comme un collier de chaussure de ski, ou pour d'autres chaussures de sport nécessitant des parties très rigides, comme une chaussure de patinage ou de surf.

Finalement, une chaussure de sport selon l'invention présente les avantages suivants :
- une grande rigidité, tout en conservant un bon compromis entre la rigidité et la souplesse nécessaire en certaines zones,
- une grande stabilité thermique,
- un faible poids, comme cela a été développé ci-dessus,
- une esthétique facilement réalisable sans entraîner de modifications majeures sur les propriétés fonctionnelles de la chaussure, par exemple par la simple visibilité depuis l'extérieur d'un élément thermodurcissable,
- un procédé de fabrication simple.

## Revendications

1. Procédé de fabrication d'un sous-ensemble de chaussure de sport, **caractérisé en ce qu'**il comprend :
- une première phase de mise en forme d'au moins un élément thermodurcissable (2) qui forme une première partie de la paroi du sous-ensemble et de fixation d'un film de fixation (15) sur tout ou partie de la surface de cet élément thermodurcissable (2) ; puis,
- une seconde phase d'injection d'un matériau thermoplastique qui forme une seconde partie de la paroi du sous-ensemble et qui vient recouvrir au moins une partie du film de fixation (15) de la première partie au niveau d'une interface sur laquelle se forme une fixation des deux parties entre-elles.

2. Procédé de fabrication d'un sous-ensemble de chaussure de sport selon la revendication 1, **caractérisé en ce que** la première phase comprend la mise en forme d'un élément thermodurcissable au sein d'un moule.

3. Procédé de fabrication d'un sous-ensemble de chaussure de sport selon la revendication 1 ou 2, **caractérisé en ce que** la première phase comprend la mise en place d'un film de fixation (15) dans le moule avant d'y placer l'élément thermodurcissable (2) ou comprend le positionnement d'un film de fixation sur la surface de l'élément thermodurcissable (2) avant sa réticulation pour obtenir sa fixation sur sa surface.

4. Procédé de fabrication d'un sous-ensemble de chaussure de sport selon l'une des revendications précédentes, **caractérisé en ce que** la fixation d'un film de fixation (15) sur tout ou partie de la surface de l'élément thermodurcissable (2) comprend l'application d'un vernis ou d'une laque sur cette surface de l'élément thermodurcissable lorsqu'il n'est pas encore réticulé.

5. Sous-ensemble de chaussure de sport comprenant une paroi comprenant une première partie en matériau thermodurcissable et une seconde partie en matériau thermoplastique, **caractérisé en ce qu'**il comprend un film de fixation à l'interface entre la première et la seconde partie pour fixer les deux parties entre elles.

6. Sous-ensemble de chaussure de sport selon la revendication précédente, **caractérisé en ce que** le film de fixation comprend un matériau thermoplastique compatible avec le matériau thermoplastique de la seconde partie pour obtenir une fixation de ces deux matériaux lors de l'injection de la seconde partie sur le film de fixation.

7. Sous-ensemble de chaussure de sport selon l'une des revendications 5 ou 6, **caractérisé en ce que** le film de fixation se présente sous la forme d'un film plastique ou d'une couche de laque ou vernis.

8. Sous-ensemble de chaussure de sport selon l'une des revendications 5 à 7, **caractérisé en ce que** le film de fixation occupe tout ou partie de la surface de la première partie disposée à l'interface entre la première et la seconde partie.

9. Sous-ensemble de chaussure de sport selon l'une des revendications 5 à 8, **caractérisé en ce que** le matériau thermodurcissable comprend des fibres de verre, de carbone, ou d'aramide.

10. Sous-ensemble de chaussure de sport selon l'une des revendications 5 à 9, **caractérisé en ce que** le film de fixation présente une épaisseur comprise entre 0,05 et 0,5 mm inclus, voire entre 0,1 et 0,2 mm inclus.

11. Sous-ensemble de chaussure de sport selon l'une des revendications 5 à 10, **caractérisé en ce que** la première partie thermodurcissable présente une extrémité (12) inclinée formant un insert au sein de la seconde partie thermoplastique à son interface avec cette seconde partie.

12. Sous-ensemble de chaussure de sport selon l'une des revendications 5 à 11, **caractérisé en ce qu'**il est une coque de chaussure de ski et **en ce qu'**il comprend un élément thermodurcissable (2) disposé au niveau de la partie inférieure de sa paroi latérale pour former une paroi peu épaisse qui réduit le risque de frottement sur la neige lors d'un virage.
